# EUROPEAN PATENT SPECIFICATION

(11) **EP 1 850 342 B1**
(45) Date of publication and mention of the grant of the patent: **05.12.2012**
(21) Application number: 05820131.0
(22) Date of filing: 21.12.2005
(51) Int. Cl.: G11B 20/18, G06F 13/00, G11B 20/10

(54) **INFORMATION RECORDING DEVICE and DATA-FLOW CONTROLLER FOR THE DEVICE**
INFORMATIONSAUFZEICHNUNGSEINRICHTUNG und DATENFLUSSSTEUERUNG FÜR DIE EINRICHTUNG
DISPOSITIF D'ENREGISTREMENT DE DONNEES et CONTROLEUR DE FLUX DE DONNEES POUR LE DISPOSITIF

(30) Priority: 28.12.2004 JP 2004378509
(43) Date of publication of application: 31.10.2007
(73) Proprietor: International Business Machines Corporation, Armonk, NY 10504 (US)
(72) Inventor: MATSUO, Hisato, Kanagawa 2428502 (JP); FUKUDA, Junichi, Kanagawa 2428502 (JP)
(74) Representative: Williams, Julian David
(86) International application number: PCT/JP2005/023488
(87) International publication number: WO 2006/070668

(56) References cited:
- EP-A- 0 913 826
- FR-A- 2 714 498
- JP-A- 4 332 971
- JP-A- 8 045 199
- JP-A- 9 251 730
- JP-A- 11 088 840
- JP-A- 2000 057 711
- US-A1- 2004 098 661
- BATE S D ET AL: "ERROR CONTROL TECHNIQUES APPLICABLE TO HF CHANNELS" IEE PROCEEDINGS I. SOLID- STATE & ELECTRON DEVICES, INSTITUTION OF ELECTRICAL ENGINEERS. STEVENAGE, GB, vol. 136, no. 1, PART 1, 1 February 1989 (1989-02-01), pages 57-63, XP000047678 ISSN: 0956-3776
- JAQUETTE G A: "LTO: a better format for midrange tape" IBM JOURNAL OF RESEARCH AND DEVELOPMENT, INTERNATIONAL BUSINESS MACHINES CORPORATION, NEW YORK, NY, US, vol. 47, no. 4, 1 July 2003 (2003-07-01), pages 429-444, XP002395659 ISSN: 0018-8646

## Description

### Technical Field

The present invention relates to data flow control by an information recording device which efficiently transfers data recorded on a recording medium. More particularly, the present invention relates to an LTO (Linear Tape Open) tape drive for efficiently transferring corrected data to an external buffer from an ECC engine, to a data flow controller of the same, and to a data flow controlling method of the same.

### Background Art

The recent development of digitization in society has expanded the demand for information recording devices. Accordingly, information recording devices with larger capacity and higher recording density have been rapidly developed. In an actual use environment, a large-capacity information recording device is required to transfer a large amount of data at high speed in response to a request from a higher-level device (host).

Particularly, a magnetic tape drive occupies an important place as a large backup unit for sequential digital data. IBM Corporation has been developing each generation of an LTO tape drive. A target of performance (for example, a capacity, a transfer rate and the like) of the LTO tape drive is defined by each specification (Nonpatent Document 1).

When data is recorded by a typical information recording device, user data received from a host is temporarily stored in an external buffer. The stored user data is transferred to an ECC engine, and an ECC parity (for example, a C2 correction code) is generated. Thereafter, a C2 parity, for example, is added to the user data and the data is returned to the external buffer. Subsequently, the user data having the parity added thereto is recorded on a recording medium from the external buffer. When the data on the recording medium is transferred to the host, the data read from the recording medium is temporarily stored in the external buffer. The stored data is transferred, while having the ECC parity added thereto, to the ECC engine. The ECC engine corrects error data and rewrites the data into the external buffer. The corrected data rewritten in the external buffer is sent to the host. One such ECC apparatus, US 2004/0098661 (Chuang, Cheng-Te Chuang, et el. "Method and Apparatus for Error Processing in Optical Disk Memories"), describes the retrieval and processing of data stored on an optical disk and utilises an external buffer. EP 0 913 826 A1 (Hewlett Packard Co., Scratch protection in tape data storage system), also describes a method of redundancy coding of data and storage of the data on a magnetic tape data system.

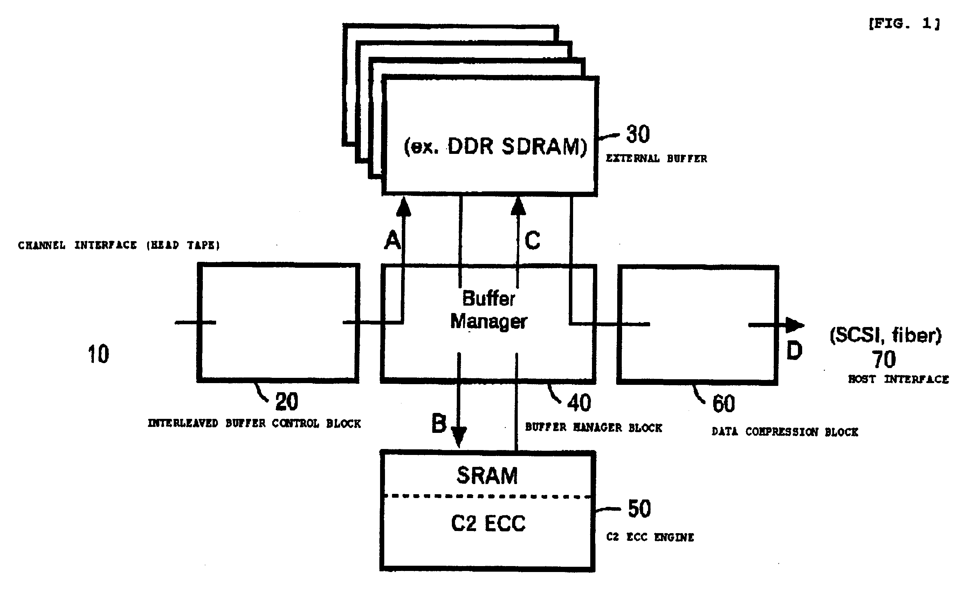

Fig. 1 shows constituent components of an input/output mechanism (an input/output channel) for data between a tape 10 and a host 70 in an LTO drive. Arrows A to D indicate steps of a transfer flow for data read from the tape 10. The data read from the tape 10 is temporarily written into an external buffer 30 by a Buffer Manager 40 (Step A). The external buffer 30 is, for example, a DDR SDRAM since a broadband is required, and the bus width thereof is 4 bytes or 8 bytes. The data written into the external buffer 30 is transferred to an SRAM in an ECC engine (specifically, a C2ECC 50) (Step B). The C2ECC 50 corrects errors in all the data and rewrites the corrected data into the DDR SDRAM 30 (Step C). The corrected data is transferred as needed to the host 70 according to a request from the DDR SDRAM 30 (Step D).

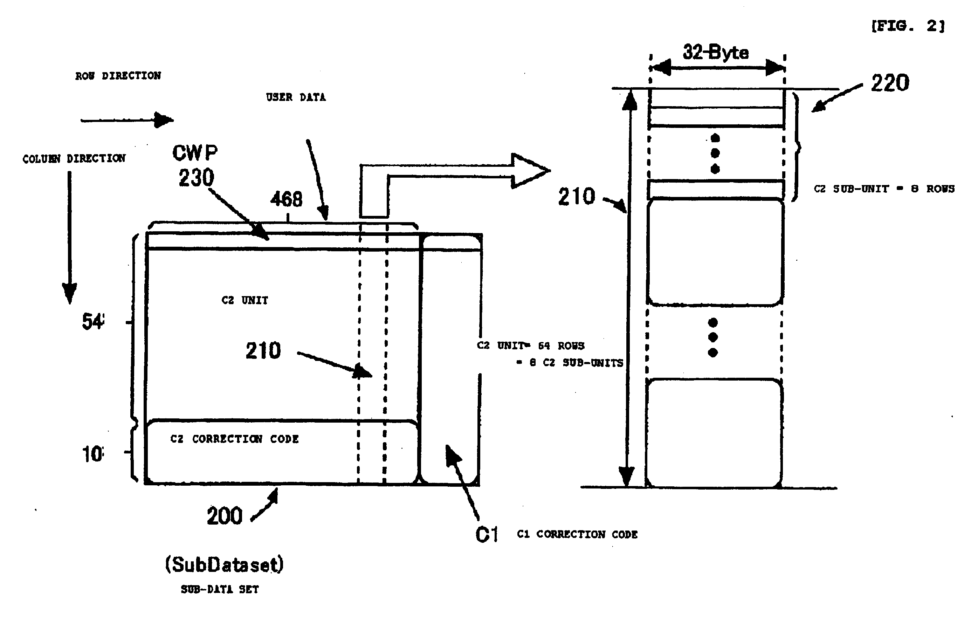

As described above, the external buffer 30 is accessed for Read or Write by the channel 10 side, the host 70 side or the C2ECC engine 50. The Buffer Manager 40 controls the access to the external buffer 30. The Buffer Manager 40 is provided as a function of a data flow controller or an ASIC. The data (data set) read from the channel 10 is transferred by an interleaved buffer control 20 by each code word pair (CWP) 230 in each row of a sub-data set 200 shown in Fig. 2. The CWP 230 is stored in the DDR SDRAM 30 by the Buffer Manager 40 (Step A). The data is compressed as needed and transferred to the host 70 (Step D). As the function of the data flow controller, the Buffer Manager 40 switches between buses in a time-sharing manner so as to enable each of blocks 20, 50 and 60 to efficiently access the DDR SDRAM 30. As is clear from Fig. 1, the structure in which the data read from the DDR SDRAM 30 is written back into the DDR SDRAM 30 imposes a strict demand for processing time on the C2ECC 50.

The restriction of data transfer time will be further extended since data processing performance twice higher than that of a second generation LTO drive is required for a currently developed third generation LTO drive. Moreover, recording density of the third generation LTO drive is 1.8 times higher than that of the second generation. For this reason, it is predicted that a data error rate is also increased. Accordingly, in realization of faster transfer of recording data, how efficiently read data is to be transferred is important.

In a conventional storage device, fast transfer of read data is often executed by improvement of components related to a data flow, such as the ECC engine 50 and the external buffer 30, and by improvement in performance. For example, in the third generation LTO, compared to the second generation, a data transfer speed defined by the specification can be achieved by performance improvement in each of the components, such as (1) improving performance of an error correction function (C2ECC engine) itself (for example, three times or more higher than that of the conventional case), (2) setting higher an operation clock of the external buffer (DDR SDRAM) 30, and (3) increasing the bus width of the DDR SDRAM, for example.

From the viewpoint of compatibility concerning data read and write between each of the generations of LTO drives and economic efficiency of a product price, data transfer efficiency is limited only by simply using high-performance components. If there is a problem with control of a flow itself of data read from a tape recording medium when corrected data is transferred from error correction means (C2ECC engine) to the external buffer, the problem should be solved.

Generally, by adopting a DDR SDRAM as the external buffer 30, burst access can be realized. Since total transfer to the external buffer 30 can be executed by using burst transfer, fast data transfer can be realized. However, in the total transfer, all the data regardless of presence of corrected data are transferred. As a result, waste is incurred in terms of data transfer efficiency.
Nonpatent Document 1: Ultrium Generation 3 16-Channel Format Specification Document U-316
Patent Document 1: Japanese Patent Application Laid-Open Publication No. 2001-177419

Meanwhile, Patent Document 1 discloses an invention of which the object is to realize fast access to an external buffer in a digital VTR including an error correction device having a product code (an internal code and an external code) (Paragraph 10). The invention described above shares a common characteristic with the present invention in the following point. Specifically, in order to achieve the above object, all input data are transferred to internal code/external code correction means, and corrected data are burst-transferred by bank switching (Paragraphs 17 to 25 and Figs. 1 and 2). However, also in Patent Document 1, all the data are burst-transferred to the external buffer regardless of the presence of corrected data. AS a result, data transfer efficiency between a product code correction device and the external buffer is still not improved.

In order to solve the problem described above, in data flow control of an information recording device, if a unit of data to be transferred from an ECC engine to an external buffer is divided into a plurality of sub-units and only required sub-units can be transferred, unnecessary data transfer can be omitted. Thus, efficient data transfer can be realized. Furthermore, if the efficient data transfer can be adopted in addition to improvement in performance of components related to the data flow, faster data transfer can be realized.

It is an object of the present invention to provide an information recording device, a data flow controller and a data flow controlling method, which realize efficient transfer of corrected data to an external buffer.

More specifically, it is an object of the present invention to provide an LTO tape drive, a data flow controller and a data flow controlling method of the same, which realize transfer of only an error-corrected sub-unit when corrected data is returned from error correction means to an external buffer.

### Disclosure of the Invention

In order to achieve the foregoing object, the present invention is an information recording device for recording on a recording medium data obtained by adding a correction code to user data of a plurality of bytes transferred from a higher-level device, which corrects an error in the data read from the recording medium by use of the correction code, and which transfers the user data to the higher-level device. The information recording device is characterized by comprising: an external buffer for temporarily storing the data read from the recording medium; error correction means which corrects an error in the data transferred from the external buffer to generate corrected data, which divides the corrected data into a plurality of sub-units, and which adds a transfer flag to the sub-units including the corrected data; and data flow means which transfers to the external buffer only a sub-unit having the transfer flag added thereto when the corrected data is to be transferred from the error correction means to the external buffer, and which rewrites only a part corresponding to the sub-unit in the data stored in the external buffer.

It is preferable that data in a two-dimensional byte matrix in the external buffer in the information recording device of the present invention is a sub-data set including 64 rows×480 columns, 64 rows×484 columns, 64 rows×488 columns or 64 rows×492 columns. The data in the two-dimensional byte matrix in the external buffer thereof is characterized in that 480, 484, 488 or 492 bytes of each row include a first correction code (p= 12, 16, 20 or 24 bytes) in 468 bytes of the user data; furthermore, 64-byte data in each column includes the user data of 54 bytes and a second correction code (q= 10 bytes).

It is preferable that the data flow means in the information recording device of the present invention is characterized in that the data flow means thereof transfers a sub-data set stored in the external buffer, when the data is transferred from the external buffer to the error correction means, by using a unit (64×x), as a unit, having a two-dimensional byte matrix in which an integral multiple (x bytes) of a bus width of the external buffer is set to be a division unit for 480, 484, 488 or 492 bytes in the row direction.

It is preferable that the error correction means in the information recording device of the present invention is characterized in that the error correction means thereof divides the unit (64×x) transferred from the external buffer into a plurality of sub-units (y×x) in a two-dimensional byte matrix by a unit of y rows, and adds a transfer flag to a sub-unit corrected in the error correction; moreover, the data flow means transfers only the sub-unit having the transfer flag added thereto, and rewrites a part corresponding to the sub-unit in the external buffer.

It is preferable that the sub-units of the present invention is characterized in that the sub-units thereof are a two-dimensional byte matrix of 8×4, 8×8, 8×16, 8×32 or 8×64, which is obtained by dividing M=64 in the column direction by a unit of y= 8 rows.

Moreover, the information recording device of the present invention also includes an LTO tape drive including a head having a plurality of write and read channels for recording and reading data in a running direction (length direction) of a tape recording medium. The LTO drive is characterized in that in the LTO drive, the tape recording medium is divided into data bands corresponding to the head in a width direction. Each of the data bands is divided into a plurality of data sub-bands corresponding to the respective channels in the head. Each of the data sub-bands includes a plurality of tracks accessed by one of the channels. Moreover, code word pairs (CWPs) in each of the rows of the sub-data set stored in the external buffer are sequentially written into tracks in the other data sub-band at a predetermined interval specified by a rotation method. Furthermore, only the sub-unit having the transfer flag added thereto is transferred to the external buffer in the error correction.

It is preferable that, the LTO drive of the present invention is characterized in that in the LTO drive thereof, the head has 16 channels, the tape recording medium is divided into 4 data bands, each of the data bands is divided into 16 data sub-bands, and each of the data sub-bands includes 11 tracks. Moreover, the LTO drive of the present invention is not limited to the above configuration. For example, it is also possible to realize an LTO drive having a configuration in which a head has 8 channels, each of data bands is divided into 8 data sub-bands, and each of the data sub-bands includes 12 or 16 tracks.

It is more preferable that, the LTO drive of the present invention is characterized in that in the LTO drive thereof, the rotation method is adopted, in which CWPs in each of the rows of the sub-data set are sequentially written into tracks in the other data sub-band by shifting six or one of the data sub-bands.

Moreover, the present invention also includes a data flow controller for controlling a data flow in an information recording device for recording on a recording medium data obtained by adding a correction code to user data of a plurality of bytes transferred from a higher-level device, which corrects an error in the data read out in response to a request from the higher-level device by use of the correction code, and which transfers the user data from the corrected data to the higher-level device. The data flow controller includes: error correction means which receives data read from the recording medium and temporarily stored in an external buffer, corrects an error in the data to generate corrected data, divides the corrected data into a plurality of sub-units, and which adds a transfer flag to the sub-units including the corrected data; and data flow means which transfers to the external buffer only a sub-unit having the transfer flag when the corrected data is to be transferred to the external buffer, and which rewrites only a part corresponding to the sub-unit in the data stored in the external buffer.

Moreover, the present invention also includes a data flow controlling method for recording on a recording medium data obtained by adding a correction code to user data of a plurality of bytes transferred from a higher-level device, for correcting an error in the data read out in response to a request from the higher-level device by use of the correction code to generate corrected data, and for transferring the corrected data to the higher-level device. The data flow controlling method is characterized by comprising the steps of: receiving the data read from the recording medium and temporarily stored in an external buffer, correcting an error in the data, dividing the corrected data into a plurality of sub-units, and adding a transfer flag to the sub-units including corrected byte data; and transferring to the external buffer only a sub-unit having the transfer flag when the corrected data is to be transferred to buffer means, and rewriting only a part corresponding to the sub-unit in the data stored in the external buffer.

### Effects of the Invention

The present invention having the configuration as described above has an advantageous effect that can contribute to faster transfer of the data on the recording medium as a whole as long as the data flow can be made more efficient when the corrected data is transferred from the C2ECC engine 50 to the external buffer 30. Particularly, in terms of enabling easy application of the present invention to existing information recording devices, it is advantageous that the data on the recording medium can be efficiently error-corrected and transferred without taking into consideration improvement in performance of existing electronic components. Moreover, in the present invention, transfer of the data corrected by the error correction means can be limited to transfer of only a few error-corrected sub-units. As a result, system power consumption of the information recording device can be reduced.

### Brief Description of the Drawings

Embodiments of the invention are described below in detail, by way of example only, with reference to the accompanying drawings in which:
Fig. 1 shows an input/output mechanism for data in an information recording device;
Fig. 2 shows examples of a C2 unit sent to error correction means 50 (ECC engine) of a preferred embodiment of the present invention and a C2 sub-unit (particularly, on the right side) which is obtained by dividing the C2 unit;
Fig. 3 shows a physical format of a track on a typical third generation LTO tape 300, in accordance with a preferred embodiment of the present invention;
Fig. 4 shows a positional relationship between a physical format of a data band shown in the center of Fig. 3 and a CWP in each row of a sub-data set, in accordance with a preferred embodiment of the present invention; and
Fig. 5 shows an example of a typical defect distribution on the tape, in accordance with a preferred embodiment of the present invention.

### Detailed Description of the Invention

A third generation LTO magnetic tape drive will be described in detail according to a best mode for carrying out the invention (hereinafter referred to as an embodiment) of the present invention. However, data flow control of the present invention is not limited to the embodiment but can be applied to each generation of an LTO drive and other information recording devices for correcting errors due to a defective medium and defective write and read channels by use of an ECC correction code.

In the LTO system, a unit of data to be transferred is called a data set. The data set includes a plurality of (for example, 16 or 64) sub-data sets. The data transferred is temporarily stored, by control of a Buffer Manager 40, in an external buffer 30, for example, a DDR SDRAM by the sub-data set as a unit.

Fig. 2 shows a sub-data set 200 (left side) in the external buffer 30 and a unit (a C2 unit 210 and a C2 sub-unit 220) (right side) of data transferred between the external buffer 30 and error correction means 50. With reference to Fig. 2, description will be given of a data flow controlling method for C2 error corrected data in the third generation LTO tape drive. One row (480 bytes, 484 bytes, 488 bytes, 492 bytes or the like) obtained by adding a C1 correction code (12 bytes, 16 bytes, 20 bytes, 24 bytes or the like) to 468 bytes of user data is called a code word pair 230 (CWP). The data is recorded on a tape by using the CWP 230 as a basic unit. One sub-data set is formed of 64 rows of the CWPs including 10 rows of C2 correction codes. A unit of read from the tape is a data set. In one data set, a sub-data set is used as a basic unit and 64 sub-data sets are sequentially piled up. When this data set is transferred to the external buffer 30, the sub-data set 200 is used as a unit and the sub-data sets are sequentially and temporarily stored. An error correction means 50 includes a C2ECC engine. A C1 parity is not written back into the external buffer since the C1 parity is added (On the fly) while transferring 468 bytes of the user data in the CWP. The C2ECC engine generates 10 bytes of the C2 correction code for 54 bytes in a vertical direction (a column direction). In the present invention, the C2ECC engine 50 will be mainly described. However, the present invention is not limited thereto. The following discussion is also applicable to a multi-dimensional ECC engine. A unit of data transferred from the external buffer 30 to the C2ECC 50 is called the C2 unit 210 obtained by dividing the sub-data set in the column direction. A data flow controller of the third generation LTO divides the CWP in the row direction by 32 bytes as the C2 unit 210 and transfers 32 columns thereof as a unit from the external buffer 30 to the C2ECC engine 50.

The C2 sub-unit 220 is obtained by dividing the C2 unit 210 in the column direction into 8 sub-units, each sub-unit including 8 rows. A size of the C2 sub-unit 220 (32 bytes×8 rows) is a minimum unit of one transfer cycle to the buffer. The present invention is characterized in that, while the unit of data sent from the external buffer 30 to the C2ECC engine 50 is the C2 unit, the unit of data rewritten into the external buffer 30 is the C2 sub-unit 220 obtained by dividing the C2 unit 210. When corrected data is included in 256 bytes (32 bytes×8 rows) of the C2 sub-unit, the data flow controller rewrites the C2 sub-unit into the external data buffer 30. Meanwhile, the C2 sub-unit including no corrected data in the C2 unit is not returned to the external buffer. When the corrected data is unevenly distributed in the C2 unit, only the C2 sub-unit including the corrected data may be transferred. Thus, data transfer efficiency can be improved. Moreover, unnecessary transfer of the C2 unit can be reduced. As a result, power consumption of the LTO drive can be reduced.

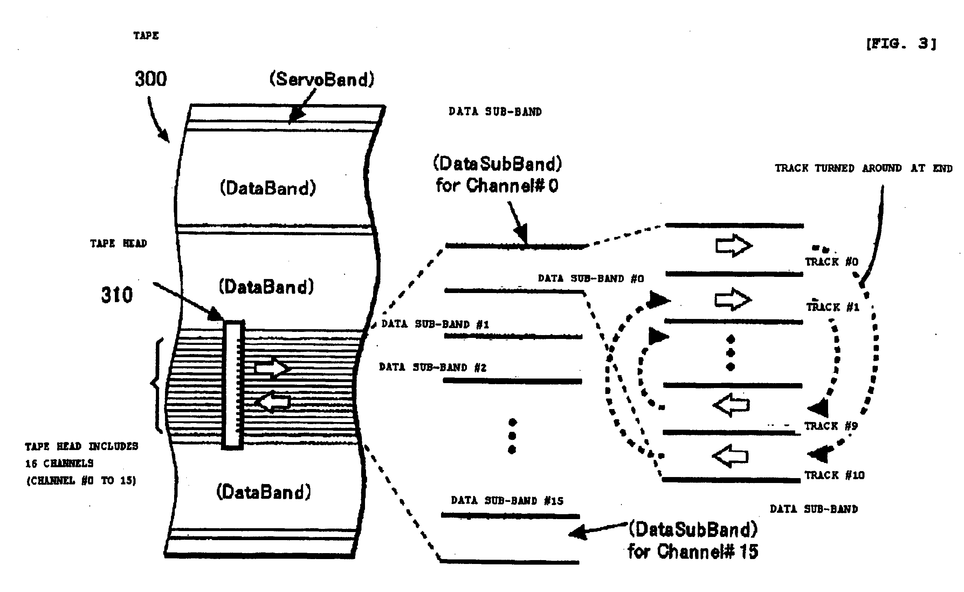

Fig. 3 shows a physical format of a track on a third generation LTO tape 300. A defect such as dust and a scratch on the tape and defective read and write channels cause data errors. By considering an adverse affect that a typical defect on the tape has on the sub-data set 200, the C2 unit 210 or the C2 sub-unit 220, a write method called rotation of the CWP in each row will be described. First, description will be given of a positional relationship between the C2 sub-unit 220 and the track on the LTO tape. On a magnetic tape, potential defects exist. In the third generation LTO required to have recording density higher than that of a second generation LTO, tracks (data) on the tape are easily influenced by the defects. Consequently, in the LTO, specified is writing by rotation of the CWP 230 in each row of the sub-data set 200 by considering shapes and positions of the defects on the tape (Nonpatent Document 1).

The left side of Fig. 3 shows a state where the tape 300 is divided in its width direction into four data bands by servo bands. A tape head 310 reads and writes each of the data bands. The center part of Fig. 3 shows a configuration of each data band including a plurality of (for example, 16) data sub-bands. The respective data sub-bands (#0 to #15) are accessed by corresponding channels (#0 to #15) included in one tape head 310. The right side of Fig. 3 shows a track structure in one data sub-band accessed by one channel in the tape head. In the third generation, one data sub-band includes 11 tracks. The 11 track are accessed by one channel while changing directions. One channel first accesses an outer physical track as indicated by an arrow. When reaching an end of the track, in other words, an end of the tape, the channel turns to and accesses a track on an opposite side indicated by a dotted line. As described above, every time the channel reaches the end of the tape, the tracks are accessed by the channel while changing the directions sequentially from the outer track to an inner track. The tracks at the same position in the 16 data sub-bands are simultaneously accessed one by one in parallel by the 16 channels (#0 to #15) in the tape head.

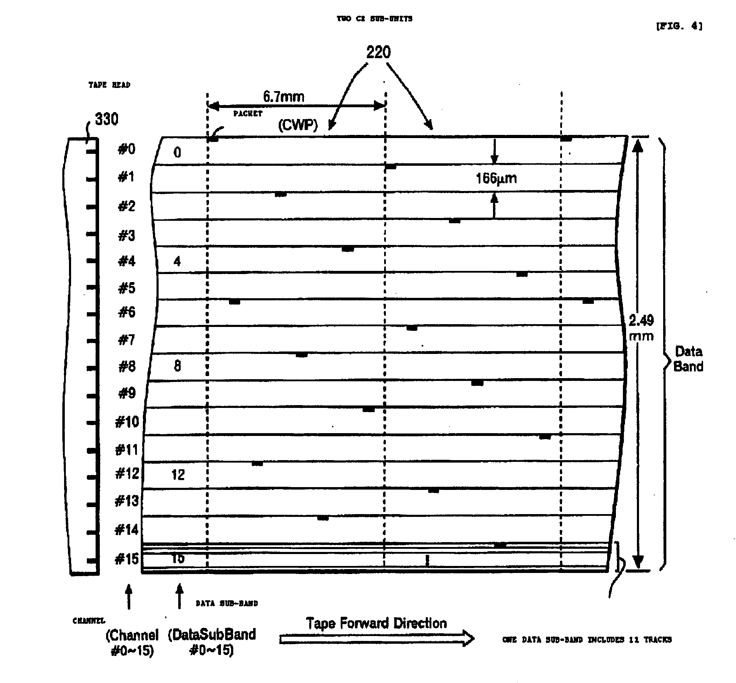

Fig. 4 shows a relationship between details of the physical format of the data band shown in the center part of Fig. 3 and the CWP in each row of the sub-data set.

In the LTO, in order to reduce the adverse affect of the defect on one sub-data set 200, the data (CWP) in each row of the sub-data set is written into another data sub-band by another channel. The data transferred from the host is written into the tracks in the data sub-band using the CWP as a unit by each of the 16 channels included in the tape head. For writing of the next CWP, the data sub-bands #, into which the data is to be written, are shifted in order to disperse errors due to the defect. Fig. 4 shows a mode of wiring the CWP in each row of one sub-data set by use of a rotation method for sequentially shifting six data sub-bands. For example, one CWP in one sub-data set is recorded by the channel #0 on tracks in the corresponding data sub-band #0. The CWP in the next row is recorded on tracks in the data sub-band #6 by the channel #6.

The CWPs in each of the rows of the sub-data set 200 are sequentially recorded toward the right side on the tracks in the 16 data sub-bands #0 to #15 in the vertical direction. Each of packets in black shown in Fig. 4 means the CWP 230 (Fig. 2) in one row. The black packets are the CWPs in each of the rows of the same sub-data set and correspond to the CWPs in the rows of the sub-data set sequentially from the left. For example, the leftmost packet on the track in the data sub-band #0 corresponds to the CWP in the first row of the sub-data set 200 shown in Fig. 2. Next, the packet in the data sub-band #6 corresponds to the CWP in the second row of the same sub-data set, and the packet in the data sub-band #12 corresponds to the CWP in the third row of the same sub-data set. Although the black packet (CWP) has a width of one track, the width of each packet (CWP) is enlarged and shown in Fig. 4 for convenience of explanation. With reference to Fig. 4, it is found out that the first 8 packets are included in the same C2 sub-unit 220 (see Fig. 2). Fig. 4 shows the data (CWPs) included in the same C2 sub-unit 220 by using dotted lines to separate the data from that in another sub-unit.

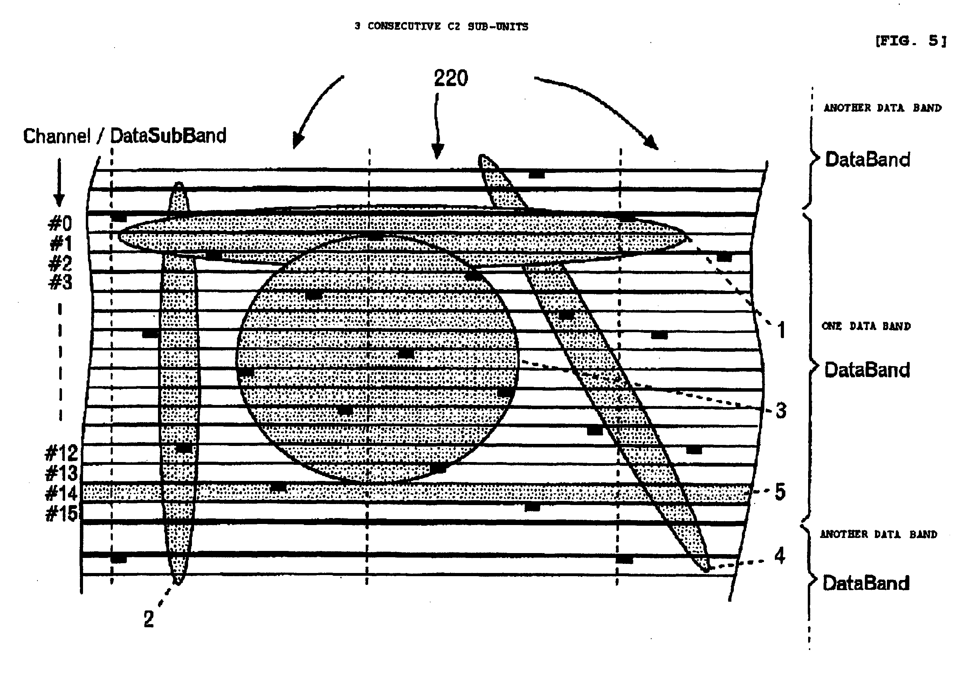

Fig. 5 shows an example of a typical defect distribution in one data band on the tape. Read errors caused by defects on the tape are classified into several types according to the defects such as adhesion of dust and the like, scratches and defective channels. From the viewpoint of the adverse affect of the defects on correction ability of the C2ECC engine, shapes of the defects are classified into the following five types. Note, however, that the defects arc assumed to be those having a band shape with a width of about 5 mm or those having a width of about 10 mm. When the defects are larger than those described above, the C2ECC engine often cannot correct the sub-data set. Moreover, minor read errors can be sufficiently corrected by the C1ECC engine using a C1 correction code.

Description will be given of adverse affect (errors) that various defects 1 to 5 shown in Fig. 5 have on the C2 unit 210 in the sub-data set 200.
1. Defect in tape running direction:
   Correction is executed over three C2 sub-units.
2. Defect in tape lateral direction across more than one data band:
   Adjacent data bands are different data, and correction of one C2 sub-unit is executed.
3. Circular defect:
   Correction of two C2 sub-units is executed.
4. Narrow defect in tape diagonal direction:
   Adjacent data bands are different data, and correction of one or two C2 sub-units is executed.
5. One track cannot be read and a certain channel cannot read:
   Correction is executed for every other C2 sub-unit.

The last defect 5 among those described above is called a dead track, which is an error due to a defective channel or the like and is considered to be one of the defects. In the example shown in Fig. 5, the defect 5 represents a case where the entire data sub-band 14 cannot be read. In this case, the packets (CWPs) included in the data sub-band #14 are included in every other C2 sub-unit. Moreover, it is required to correct four errors among the eight C2 sub-units in one C2 unit.

Particularly, in the case where the CWPs in each of the rows of the sub-data set are recorded on the tape by use of the rotation method described above, there is hardly any influence of the defects continuous in a track direction (the types 1 and 5 in Fig. 5). Even when the C2 unit 210 shown in Fig. 2 includes error data, there often arises a case where the error data is focused in a specific C2 sub-unit 220 and is not included in the other C2 sub-units 220. Similarly, in the defects extended in the tape width direction in Fig. 5 (the types 2 to 4), errors arc included in about two out of the eight C2 sub-units. In the case where the C2 unit 210 is returned from the C2ECC engine 50 to the external buffer 30 for the both types of errors, a transfer flag is set up for each of the C2 sub-units depending on presence of errors, and only the sub-units required are transferred from the C2 engine. Thus, transfer efficiency of the external buffer can be improved.

In the case of such typical defects, data correction for only about two C2 sub-units is required in most of the cases. The C2 sub-units to be transferred from the C2ECC engine 50 to the external buffer 30 can be limited to two out of the eight C2 sub-units in the C2 unit.

Furthermore, the above reduction in the C2 sub-units to be transferred also has an effect of reduction in power consumption of a system including also the buffer. The third generation LTO is required to realize faster transfer compared to the second generation LTO. Thus, the bus width of the external buffer 30 is increased from 4 bytes in the second generation to 8 bytes. Consequently, in the third generation LTO, 8 bytes is defined as 1 word. The data flow controller of the LTO transfers 168 words in total to the external buffer 30 in one bus cycle. A band width of the C2ECC engine occupies one C2 sub-unit, in other words, 32 words out of 168 words. Specifically, a bus occupancy rate in C2 correction is 19% (= 32÷168). In consideration of distribution properties of C2 corrected data in the LTO, it is considered to be often the case that only two C2 sub-units are transferred from the C2ECC engine to the external buffer. Consequently, by adopting a function of transferring only the corrected C2 sub-units by the data flow controller, bus bandwidth efficiency can be improved by up to 5% (19%×2/8) in the LTO drive.

Even if a data dispersion method (for example, rotation) for avoiding defects locally existing in specific portions on the tape is applied in the third generation LTO as described above, there is a characteristic that data errors still appear while being concentrated in specific spots (the C2 sub-units) in the sub-data set (or the C2 sub-units). In consideration of the above characteristic, a range of application of the present invention to the LTO drive is considered to be extended in the future. Note that, in each of the first and second generation LTO systems, the number of data bands is 4, the number of channels and data sub-bands is 8, the number of tracks is 12 or 16, and the number of shifts in the data sub-bands in the rotation method is 1.

In the above embodiment, the description was given of efficient transfer of corrected data from the C2ECC engine to the external buffer in the LTO tape drive. However, the present invention is not limited to the technical field of the tape drive described above. The recent technical requirements, such as higher density of recording medium, improvement in correction ability of the ECC engine and faster transfer of data to the host, exist in all recording devices. The unit of data to be processed by the ECC engine will be increased in the future. Meanwhile, it is expected that, along with improvement in quality of recording medium, error data locally exists in specific spots in the unit of data to be processed by the ECC engine. If the data flow controlling method of the present invention can be applied to a storage device having a configuration as described above, unnecessary data transfer from the ECC engine to the external buffer can be avoided. Thus, it is possible to realize faster data transfer and reduction in power consumption of a system.

Viewed from a first aspect the present invention provides an information recording device for recording on a recording medium data obtained by adding a correction code to user data of a plurality of bytes transferred from a higher-level device, which corrects an error in the data read from the recording medium by use of the correction code, and for transferring the user data to the higher-level device, the information recording device characterized by comprising: an external buffer for temporarily storing the data read from the recording medium; error correction means which corrects an error in the data transferred from the external buffer to generate corrected data, which divides the corrected data into a plurality of sub-units, and which adds a transfer flag to the sub-units including the corrected data; and data flow means which transfers to the external buffer only a sub-unit having the transfer flag added thereto when the corrected data is to be transferred from the error correction means to the external buffer, and which rewrites only a part corresponding to the sub-unit in the data stored in the external buffer.

Preferably, the present invention provides an apparatus wherein the apparatus is further characterized in that: the data is formed of a two-dimensional byte matrix as a basic unit, the byte matrix including a plurality of rows (one row is horizontal byte data) × a plurality of columns (one column is vertical byte data), the rows of byte data include a first correction code generated by the error correction means in the user data, and the columns of byte data include a second correction code generated by the error correction means in the user data.

Preferably, the present invention provides an apparatus wherein the apparatus is further characterized in that: the data is stored in the external buffer by using a two-dimensional byte matrix including M rows × N columns as a unit, N bytes of the rows include a first correction code (p bytes) generated by the error correction means in the user data (n bytes), and M bytes of the columns include a second correction code (q bytes) generated by the error correction means in the user data (m bytes).

Preferably, the present invention provides an apparatus wherein the apparatus is further characterized in that: the two-dimensional byte matrix is a sub-data set including 64 rows×480 columns, 64 rows×484 columns, 64 rows×488 columns or 64 rows×492 columns (M= 64; N= 480, 484, 488 or 492), N= 480, 484, 488 or 492 bytes of the rows include a first correction code (p= 12, 16, 20 or 24 bytes) in n= 468 bytes of the user data, and 64 bytes of the columns include m= 54 bytes of the user data and a second correction code (q= 10 bytes).

Preferably, the present invention provides an apparatus wherein the apparatus is further characterized in that: the data flow means transfers a sub-data set stored in the external buffer, when the data is transferred from the external buffer to the error correction means, by using a second unit (64×x), as a unit, having a two-dimensional byte matrix in which an integral multiple (x bytes) of a bus width of the external buffer is set to be a division unit for N in the row direction.

Preferably, the present invention provides an apparatus wherein the apparatus is further characterized in that: the external buffer is a DDR SDRAM, the division unit is x= 4, 8, 16, 32 or 64 bytes, and the unit (64×x) is a two-dimensional byte matrix of 64×4, 64×8, 64×12, 64×32 or 64×64.

Preferably, the present invention provides an apparatus wherein the apparatus is further characterized in that: the error correction means divides the unit (64×x) transferred from the external buffer into a plurality of sub-units (y×x) in a two-dimensional byte matrix by a unit of y rows, and adds a transfer flag to a sub-unit corrected in the error correction, and the data flow means transfers only the sub-unit having the transfer flag added thereto, and rewrites a part corresponding to the sub-unit in the external buffer.

Preferably, the present invention provides an apparatus wherein the apparatus is further characterized in that: the sub-units (y×x) are a two-dimensional byte matrix of 8×4, 8×8, 8×16, 8×32 or 8×64, which is obtained by dividing M=64 in the column direction by a unit of y=8 rows.

Preferably, the present invention provides an apparatus wherein the apparatus is further characterized in that: the information recording device is an LTO drive including a head having a plurality of write and read channels for recording and reading the data in a running direction (length direction) of a tape recording medium, the tape recording medium is divided into data bands corresponding to the head in a width direction, each of the data bands is divided into a plurality of data sub-bands corresponding to the respective channels in the head, each of the data sub-bands includes a plurality of tracks accessed by one of the channels, code word pairs (CWPs) in each of the rows of the sub-data set stored in the external buffer are sequentially written into tracks in the other data sub-band at a predetermined interval specified by a rotation method, and only the sub-unit having the transfer flag added thereto is transferred to the external buffer in the error correction.

Preferably, the present invention provides an apparatus wherein the apparatus is further characterized in that: the head has 16 channels, the tape recording medium is divided into 4 data bands, each of the data bands is divided into 16 data sub-bands, and each of the data sub-bands includes 11 tracks.

Preferably, the present invention provides an apparatus wherein the apparatus is further characterized in that: in the rotation method, CWPs in each of the rows of the sub-data set are sequentially written into tracks in the other data sub-band by shifting six of the data sub-bands.

Viewed from a second aspects the present invention provides a data flow controller for controlling a data flow in an information recording device for recording on a recording medium data obtained by adding a correction code to user data of a plurality of bytes transferred from a higher-level device, which corrects an error in the data read out in response to a request from the higher-level device by use of the correction code to generate corrected data, and which transfers the user data from the corrected data to the higher-level device, characterized by comprising: error correction means which receives data read from the recording medium and temporarily stored in an external buffer, corrects an error in the data, which divides the corrected data into a plurality of sub-units, and which adds a transfer flag to the sub-units including the corrected data; and data flow means which transfers to the external buffer only a sub-unit having the transfer flag when the corrected data is to be transferred to the external buffer, and which rewrites only a part corresponding to the sub-unit in the data stored in the external buffer.

Preferably, the present invention provides an apparatus wherein the apparatus is further characterized in that: the data is formed of a two-dimensional byte matrix which is a sub-data set including 64 rows×480 columns, 64 rows×484 columns, 64 rows×488 columns or 64 rows×492 columns, 480, 484, 488 or 492 bytes of the rows include a first correction code of 12, 16, 20 or 24 bytes in n= 468 bytes of the user data, and 64-byte data in the columns includes the user data of 54 bytes and a second correction code of 10 bytes.

Preferably, the present invention provides an apparatus wherein the apparatus is further characterized in that: the data flow means transfers a sub-data set stored in the external buffer, when the data is transferred from the external buffer to the error correction means, by using a second unit (64×x), as a unit, having a two-dimensional byte matrix in which an integral multiple (x bytes) of a bus width of the external buffer is set to be a division unit for N bytes (N= 480, 484, 488 or 492) in the row direction.

Preferably, the present invention provides an apparatus wherein the apparatus is further characterized in that: the error correction means divides the unit (64×x) transferred from the external buffer into a plurality of sub-units (y×x) in a two-dimensional byte matrix by a unit of y rows, and adds a transfer flag to a sub-unit corrected in the error correction, and the data flow means transfers only the sub-unit having the transfer flag added thereto, and rewrites a part corresponding to the sub-unit in the external buffer.

Viewed from a third aspect the present invention provides a data flow controlling method for recording on a recording medium data obtained by adding a correction code to user data of a plurality of bytes transferred from a higher-level device, for correcting an error in the data read out in response to a request from the higher-level device by use of the correction code to generate corrected data, and for transferring the corrected data to the higher-level device, the method characterized by comprising the steps of: receiving the data read from the recording medium and temporarily stored in an external buffer, correcting an error in the data, dividing the corrected data into a plurality of sub-units, and adding a transfer flag to the sub-units including corrected byte data; and transferring to the external buffer only a sub-unit having the transfer flag when the corrected data is to be transferred to buffer means, and rewriting only a part corresponding to the sub-unit in the data stored in the external buffer.

## Claims

1. An information recording device for recording on a recording medium (10) data obtained by adding a correction code to user data of a plurality of bytes transferred from a higher-level device, which corrects an error in the data read from the recording medium by use of the correction code, and for transferring the user data to the higher-level device, the information recording device **characterized by** comprising:
an external buffer (30) for temporarily storing the data read from the recording medium;
error correction means (50) which corrects an error in the data transferred from the external buffer to generate corrected data, which divides the corrected data into a plurality of sub-units (220), wherein a sub-unit comprises a plurality of bytes, and which adds a transfer flag to the sub-units including the corrected data, wherein a transfer flag indicates whether a sub-unit comprises corrected data; and
data flow means (40) which transfers to the external buffer only a sub-unit having the transfer flag added thereto when the corrected data is to be transferred from the error correction means to the external buffer, and which rewrites only a part corresponding to the sub-unit in the data stored in the external buffer.

2. The information recording device according to claim 1, **characterized in that**:
the data is formed of a two-dimensional byte matrix (200) as a basic unit, the byte matrix including a plurality of rows (one row is horizontal byte data) × a plurality of columns (one column is vertical byte data),
the rows of byte data include a first correction code (C1) generated by the error correction means in the user data, and
the columns of byte data include a second correction code (C2) generated by the error correction means in the user data.

3. The information recording device according to claim 2, **characterized in that**:
the data is stored in the external buffer by using a two-dimensional byte matrix including M rows × N columns as a unit,
N bytes of the rows include a first correction code (p bytes) generated by the error correction means in the user data (n bytes), and
M bytes of the columns include a second correction code (q bytes) generated by the error correction means in the user data (m bytes).

4. The information recording device according to claim 3, **characterized in that**:
the two-dimensional byte matrix is a sub-data set including 64 rows×480 columns, 64 rows×484 columns, 64 rows×488 columns or 64 rows×492 columns (M= 64; N= 480, 484, 488 or 492),
N= 480, 484, 488 or 492 bytes of the rows include a first correction code (p= 12, 16, 20 or 24 bytes) in n= 468 bytes of the user data, and
64 bytes of the columns include m= 54 bytes of the user data and a second correction code (q= 10 bytes).

5. The information recording device according to claim 4, **characterized in that**:
the data flow means transfers a sub-data set stored in the external buffer, when the data is transferred from the external buffer to the error correction means, by using a second unit (64×x), as a unit, having a two-dimensional byte matrix in which an integral multiple (x bytes) of a bus width of the external buffer is set to be a division unit for N in the row direction.

6. The information recording device according to claim 5, **characterized in that**:
the external buffer is a DDR SDRAM,
the division unit is x= 4, 8, 16, 32 or 64 bytes, and
the unit (64×x) is a two-dimensional byte matrix of 64×4, 64×8, 64×16, 64×32 or 64×64.

7. A data flow controller for controlling a data flow in an information recording device for recording on a recording medium data (10) obtained by adding a correction code to user data of a plurality of bytes transferred from a higher-level device, which corrects an error in the data read out in response to a request from the higher-level device by use of the correction code to generate corrected data, and which transfers the user data from the corrected data to the higher-level device, **characterized by** comprising:
error correction means (50) which receives data read from the recording medium and temporarily stored in an external buffer (30), corrects an error in the data, which divides the corrected data into a plurality of sub-units (220), wherein a sub-unit comprises a plurality of bytes, and which adds a transfer flag to the sub-units including the corrected data, wherein a transfer flag indicates whether a sub-unit comprises corrected data; and
data flow means (40) which transfers to the external buffer only a sub-unit having the transfer flag when the corrected data is to be transferred to the external buffer, and which rewrites only a part corresponding to the sub-unit in the data stored in the external buffer.

8. The data flow controller according to claim 7, **characterized in that**:
the data is formed of a two-dimensional byte matrix (200) which is a sub-data set including 64 rows×480 columns, 64 rows×484 columns, 64 rows×488 columns or 64 rows×492 columns,
480, 484, 488 or 492 bytes of the rows include a first correction code (C1) of 12, 16, 20 or 24 bytes in n= 468 bytes of the user data, and
64-byte data in the columns includes the user data of 54 bytes and a second correction code (C2) of 10 bytes.

9. The data flow controller according to claim 8, **characterized in that**:
the data flow means transfers a sub-data set stored in the external buffer, when the data is transferred from the external buffer to the error correction means, by using a second unit (64×x), as a unit, having a two-dimensional byte matrix in which an integral multiple (x bytes) of a bus width of the external buffer is set to be a division unit for N bytes (N= 480, 484, 488 or 492) in the row direction.

10. The data flow controller according to claim 9, **characterized in that**:
the error correction means divides the unit (64×x) transferred from the external buffer into a plurality of sub-units (y×x) in a two-dimensional byte matrix by a unit of y rows, and adds a transfer flag to a sub-unit corrected in the error correction, and
the data flow means transfers only the sub-unit having the transfer flag added thereto, and rewrites a part corresponding to the sub-unit in the external buffer.

## Patentansprüche

1. Datenaufzeichnungseinheit für das Aufzeichnen von Daten auf einem Aufzeichnungsmedium (10), die erhalten werden, indem ein Korrekturcode zu Benutzerdaten aus einer Vielzahl von Bytes, die von einer übergeordneten Einheit übertragen werden, hinzugefügt wird, die anhand des Korrekturcodes einen Fehler in den Daten, die aus dem Aufzeichnungsmedium gelesen werden, korrigiert, sowie für das Übertragen der Benutzerdaten an die übergeordnete Einheit, wobei die Datenaufzeichnungseinheit **dadurch gekennzeichnet ist, dass** sie Folgendes umfasst:
einen externen Pufferspeicher (30) für das vorübergehende Speichern der aus dem Aufzeichnungsmedium gelesenen Daten;
ein Fehlerkorrekturmittel (50), das einen Fehler in den von dem externen Pufferspeicher übertragenen Daten korrigiert, um korrigierte Daten zu erzeugen, das die korrigierten Daten in eine Vielzahl von Teileinheiten (220) unterteilt, wobei eine Teileinheit eine Vielzahl von Bytes umfasst, und das den Teileinheiten, welche die korrigierten Daten enthalten, eine Übertragungsmarkierung hinzufügt, wobei eine Übertragungsmarkierung angibt, ob eine Teileinheit korrigierte Daten umfasst; und
ein Datenflussmittel (40), das, wenn die korrigierten Daten von dem Fehlerkorrekturmittel an den externen Pufferspeicher übertragen werden sollen, lediglich eine Teileinheit, der die Übertragungsmarkierung hinzugefügt wurde, überträgt und das in den Daten, die in dem externen Pufferspeicher gespeichert sind, lediglich einen Teil erneut schreibt, welcher der Teileinheit entspricht.

2. Datenaufzeichnungseinheit nach Anspruch 1, **dadurch gekennzeichnet, dass**:
die Daten aus einer zweidimensionalen Byte-Matrix (200) als grundlegender Einheit gebildet werden, wobei die Byte-Matrix eine Vielzahl von Zeilen (eine Zeile besteht aus horizontalen Byte-Daten) multipliziert mit einer Vielzahl von Spalten (eine Spalte besteht aus vertikalen Byte-Daten) enthält,
die Zeilen von Byte-Daten einen ersten Korrekturcode (C1) enthalten, der durch das Fehlerkorrekturmittel in den Benutzerdaten erzeugt wurde, und
die Spalten von Byte-Daten einen zweiten Korrekturcode (C2) enthalten, der durch das Fehlerkorrekturmittel in den Benutzerdaten erzeugt wurde.

3. Datenaufzeichnungseinheit nach Anspruch 2, **dadurch gekennzeichnet, dass**:
die Daten in dem externen Pufferspeicher gespeichert werden, indem eine zweidimensionale Byte-Matrix verwendet wird, die als Einheit M Zeilen x N Spalten enthält,
N Bytes der Zeilen einen ersten Korrekturcode (p Bytes) enthalten, der durch das Fehlerkorrekturmittel in den Benutzerdaten (n Bytes) erzeugt wurde, und
M Bytes der Spalten einen zweiten Korrekturcode (q Bytes) enthalten, der durch das Fehlerkorrekturmittel in den Benutzerdaten (m Bytes) erzeugt wurde.

4. Datenaufzeichnungseinheit nach Anspruch 3, **dadurch gekennzeichnet, dass**:
die zweidimensionale Byte-Matrix ein Teildatensatz mit 64 Zeilen x 480 Spalten, 64 Zeilen x 484 Spalten, 64 Zeilen x 488 Spalten oder 64 Zeilen x 492 Spalten (M = 64; N = 480, 484, 488 oder 492) ist,
N = 480, 484, 488 oder 492 Bytes der Zeilen einen ersten Korrekturcode (p = 12, 16, 20 oder 24 Bytes) in n = 468 Bytes der Benutzerdaten enthalten, und
64 Bytes der Spalten m = 54 Bytes der Benutzerdaten und einen zweiten Korrekturcode (q = 10 Bytes) enthalten.

5. Datenaufzeichnungseinheit nach Anspruch 4, **dadurch gekennzeichnet, dass**:
das Datenflussmittel, wenn die Daten von dem externen Pufferspeicher an das Fehlerkorrekturmittel übertragen werden, einen in dem externen Pufferspeicher gespeicherten Teildatensatz überträgt, indem eine zweite Einheit (64 mal x) als Einheit verwendet wird, die eine zweidimensionale Byte-Matrix aufweist, bei der als Teilungseinheit für N in Zeilenrichtung ein ganzzahliges Mehrfaches (x Bytes) einer Busbreite des externen Pufferspeichers gesetzt wird.

6. Datenaufzeichnungseinheit nach Anspruch 5, **dadurch gekennzeichnet, dass**:
der externe Pufferspeicher ein DDR-SDRAM ist,
die Teilungseinheit x = 4, 8, 16, 32 oder 64 Bytes ist und
die Einheit (64 mal x) eine zweidimensionale Byte-Matrix mit 64 x 4, 64 x 8, 64 x 16, 64 x 32 oder 64 x 64 Bytes ist.

7. Datenfluss-Steuereinheit für das Steuern eines Datenflusses in einer Datenaufzeichnungseinheit für das Aufzeichnen von Daten (10) auf einem Aufzeichnungsmedium, die erhalten werden, indem ein Korrekturcode zu Benutzerdaten aus einer Vielzahl von Bytes, die von einer übergeordneten Einheit übertragen werden, hinzugefügt wird, die anhand des Korrekturcodes einen Fehler in den Daten, die als Reaktion auf eine Anforderung aus der übergeordneten Einheit gelesen werden, korrigiert, um korrigierte Daten zu erzeugen, und welche die Benutzerdaten von den korrigierten Daten an die übergeordnete Einheit überträgt, **dadurch gekennzeichnet, dass** sie Folgendes umfasst:
ein Fehlerkorrekturmittel (50), das Daten empfängt, die aus dem Aufzeichnungsmittel gelesen und vorübergehend in einem externen Pufferspeicher (30) gespeichert wurden, das einen Fehler in den Daten korrigiert, das die korrigierten Daten in eine Vielzahl von Teileinheiten (220) unterteilt, wobei eine Teileinheit eine Vielzahl von Bytes umfasst, und das den Teileinheiten, welche die korrigierten Daten enthalten, eine Übertragungsmarkierung hinzufügt, wobei eine Übertragungsmarkierung angibt, ob eine Teileinheit korrigierte Daten umfasst; und
ein Datenflussmittel (40), das, wenn die korrigierten Daten an den externen Pufferspeicher übertragen werden sollen, lediglich eine Teileinheit mit der Übertragungsmarkierung an den externen Pufferspeicher überträgt, und das in den Daten, welche in dem externen Datenpuffer gespeichert sind, lediglich einen Teil erneut schreibt, welcher der Teileinheit entspricht.

8. Datenfluss-Steuereinheit nach Anspruch 7, **dadurch gekennzeichnet, dass**:
die Daten aus einer zweidimensionalen Byte-Matrix (200) gebildet werden, bei der es sich um einen Teildatensatz handelt, der 64 Zeilen x 480 Spalten, 64 Zeilen x 484 Spalten, 64 Zeilen x 488 Spalten oder 64 Zeilen x 492 Spalten enthält,
480, 484, 488 oder 492 Bytes der Zeilen einen ersten Korrekturcode (C1) mit 12, 16, 20 oder 24 Bytes in n = 468 Bytes der Benutzerdaten enthalten, und
64 Bytes an Daten in den Spalten die Benutzerdaten mit 54 Bytes und einen zweiten Korrekturcode (C2) mit 10 Bytes enthalten.

9. Datenfluss-Steuereinheit nach Anspruch 8, **dadurch gekennzeichnet, dass**:
das Datenflussmittel, wenn die Daten von dem externen Pufferspeicher an das Fehlerkorrekturmittel übertragen werden, einen in dem externen Pufferspeicher gespeicherten Teildatensatz überträgt, indem eine zweite Einheit (64 mal x) als Einheit verwendet wird, die eine zweidimensionale Byte-Matrix aufweist, bei der als Teilungseinheit für N Bytes (N = 480, 484, 488 oder 492) in Zeilenrichtung ein ganzzahliges Mehrfaches (x Bytes) einer Busbreite des externen Pufferspeichers gesetzt wird.

10. Datenfluss-Steuereinheit nach Anspruch 9, **dadurch gekennzeichnet, dass**:
das Fehlerkorrekturmittel die von dem externen Pufferspeicher übertragene Einheit (64 mal x) in eine Vielzahl von Teileinheiten (y mal x) in einer zweidimensionalen Byte-Matrix mit einer Einheit von y Zeilen unterteilt und einer Teileinheit, die bei der Fehlerkorrektur korrigiert wurde, eine Übertragungsmarkierung hinzufügt, und
das Datenfluss-Steuermittel nur die Teileinheit überträgt, der die Übertragungsmarkierung hinzugefügt wurde, und in dem externen Pufferspeicher einen Teil neu schreibt, welcher der Teileinheit entspricht.

## Revendications

1. Unité d'enregistrement de données destinée à enregistrer sur un support d'enregistrement (10) des données obtenues par l'ajout d'un code de correction aux données d'utilisateur d'une pluralité d'octets transférés à partir d'une unité de niveau supérieur, qui corrige une erreur dans les données lues à partir du support d'enregistrement par l'utilisation du code de correction, et pour transférer les données d'utilisateur à l'unité de niveau supérieur, l'unité d'enregistrement d'informations **caractérisé en ce qu'**il comprend :
une mémoire tampon externe (30) pour stocker temporairement les données lues à partir du support d'enregistrement ;
un moyen de correction d'erreurs (50) qui corrige une erreur dans les données transférées de la mémoire tampon externe pour générer des données corrigées, qui divise les données corrigées en une pluralité de sous-unités (220), une sous-unité comprenant une pluralité d'octets, et qui ajoute une balise de transfert aux sous-unités contenant les données corrigées ; et
un moyen de flux de données (40) qui transfère à la mémoire tampon externe uniquement une sous-unité ayant la balise de transfert quand la données corrigée doit être transférée du moyen de correction d'erreur à la mémoire tampon externe et qui réécrit uniquement une partie correspondant à la sous-unité dans la données stockée dans la mémoire tampon externe.

2. Unité d'enregistrement de données selon la revendication 1, **caractérisé en ce que** :
les données sont formées à partir d'une matrice bidimensionnelle d'octets (200) en tant qu'unité de base, la matrice d'octets comprenant une pluralité de rangées (une rangée est un octet de données horizontales) x une pluralité de colonnes (une colonne est un octet de données verticales),
les rangées de données d'octets comprennent un premier code de correction (C1) généré par le moyen de correction d'erreur dans les données de l'utilisateur, et
les colonnes de données d'octets comprennent un second code de correction (C2) généré par le moyen de correction d'erreur dans les données de l'utilisateur.

3. Unité d'enregistrement de données selon la revendication 2, **caractérisé en ce que**:
les données sont stockées dans la mémoire tampon externe en utilisant une matrice d'octets bidimensionnelle comprenant M colonnes x N rangées en tant qu'unité,
N octets des rangées comprennent un premier code de correction (p octets) généré par le moyen de correction d'erreurs dans les données d'utilisateur (n octets), et M octets des colonnes comprennent un deuxième code de correction (q octets) généré par le moyen de correction d'erreurs dans les données d'utilisateur (m octets).

4. Unité d'enregistrement de données selon la revendication 3, **caractérisé en ce que** :
la matrice d'octets bidimensionnelle est un ensemble de sous-données incluant 64 rangées x 480 colonnes, 64 rangées x 484 colonnes, 64 rangées x 488 colonnes ou 64 rangées x 492 colonnes (M = 64 ; N = 480, 484, 488 ou 492),
N = 480, 484, 488 ou 492 octets de rangées comprennent un premier code de correction (p = 12, 16, 20 ou 24 octets) en n = 468 octets de données utilisateur, et
64 octets des colonnes comprennent m = 54 octets de données d'utilisateur et un deuxième code de correction (q = 10 octets).

5. Unité d'enregistrement d'informations selon la revendication 4, **caractérisé en ce que** :
le moyens de flux de données transfère un sous-ensemble de données stockées dans la mémoire tampon externe, lorsque les données sont transférées à partir de la mémoire tampon externe au moyen de correction d'erreur, en utilisant une seconde unité (64 fois x), en tant qu'unité, comportant une matrice bidimensionnelle d'octets dans laquelle un multiple entier (x octets) d'une largeur de bus de la mémoire tampon externe est définie comme étant une unité de division de N dans la direction de rangée.

6. Unité d'enregistrement de données selon la revendication 5, **caractérisé en ce que** :
la mémoire tampon externe est une mémoire SDRAM DDR,
l'unité de division est x = 4, 8, 16, 32 ou 64 octets, et
l'unité (64 fois x) est une matrice d'octets bidimensionnelle de 64x4, 64x8, 64x16, 64x32 ou 64x64.

7. Contrôleur de débit de données pour commander un flux de données dans une unité d'enregistrement de données destiné à enregistrer sur un support d'enregistrement de données (10) obtenu en ajoutant un code de correction aux données d'utilisateur d'une pluralité d'octets transférés à partir d'une unité de niveau supérieur, qui corrige une erreur dans les données lues en réponse à une requête provenant de l'unité de niveau supérieur par l'utilisation du code de correction pour générer des données corrigées, et qui transfère les données d'utilisateur à partir des données corrigées à l'unité de niveau supérieur, **caractérisé en ce qu'**il comprend :
un moyen de correction d'erreur (50) qui reçoit des données lues à partir du support d'enregistrement et mémorisées temporairement dans une mémoire tampon externe (30), corrige une erreur dans les données, qui divise les données corrigées en une pluralité de sous-unités (220), une sous-unité comprenant une pluralité d'octets et qui ajoute une balise de transfert aux sous-unités comprenant les données corrigées, une balise de transfert indiquant si une sous-unité comprend une donnée corrigée ; et
un moyen de flux de données (40) qui transfère à la mémoire tampon externe seulement une sous-unité ayant la balise de transfert lorsque la donnée corrigée doit être transférée à la mémoire tampon externe, et qui réécrit seulement une partie correspondant à la sous-unité dans les données stockées dans la mémoire tampon externe.

8. Contrôleur de débit de données selon la revendication 7, **caractérisé en ce que** :
les données sont formées à partir d'une matrice bidimensionnelle d'octets (200) qui est un sous-ensemble de données incluant 64 rangées x 480 colonnes, 64 rangées x 484 colonnes, 64 rangées x 488 colonnes ou 64 rangées x 492 colonnes,
480, 484, 488 ou 492 octets des rangées incluent un premier code de correction (C1) de 12, 16, 20 ou 24 octets dans n = 468 octets de données utilisateur, et
64 octets de données dans les colonnes incluent les données d'utilisateur de 54 octets et un second code de correction (C2) de 10 octets.

9. Contrôleur de débit de données selon la revendication 8, **caractérisé en ce que**:
le moyen de flux de données transfère un sous-ensemble de données stockées dans la mémoire tampon externe, lorsque les données sont transférées à partir de la mémoire tampon externe au moyen de correction d'erreurs, en utilisant une seconde unité (64 fois x), en tant qu'unité, comportant une matrice d'octet bidimensionnelle dans laquelle un multiple entier (x octets) d'une largeur de bus de la mémoire tampon externe est défini comme étant une unité de division de N octets (N = 480, 484, 488 ou 492) dans la direction de rangée.

10. Contrôleur de débit de données selon la revendication 14, **caractérisé en ce que** :
le moyen de correction d'erreurs divise l'unité (64 fois x) transférée à partir de la mémoire tampon externe en une pluralité de sous-unités (y fois x) dans une matrice bidimensionnelle d'octets par une unité de lignes y, et ajoute une balise de transfert à une sous-unité corrigée dans la correction d'erreur, et
le moyen de flux de données ne transfère que la sous-unité ayant la balise de transfert d'ajoutée à celle-ci, et réécrit une partie correspondant à la sous-unité dans la mémoire tampon externe.
